# EUROPÄISCHE PATENTANMELDUNG

(11) **EP 2 826 656 A1**
(43) Veröffentlichungstag der Anmeldung: **21.01.2015**
(21) Anmeldenummer: 14163314.9
(22) Anmeldetag: 03.04.2014
(51) Int. Cl.: B60K 15/03, B60K 15/077

(54) **Landwirtschaftliches Fahrzeug**

(30) Priorität: 03.07.2013 DE 102013106962
(71) Anmelder: CLAAS Tractor SAS, 78141 Velizy-Villacoublay (FR)
(72) Erfinder: Lacord, Ludovic, 78650 Saulx Marchais (FR)

(57) **Zusammenfassung**

Ein landwirtschaftliches Fahrzeug, insbesondere Traktor (1) mit einer Einrichtung (3) zur Bevorratung einer Flüssigkeit (4) wie vorzugsweise eines Betriebs- oder Hilfsstoffs in zumindest zwei Behältern (5, 6), die mittels einer Leitungsanordnung (7) derart miteinander verbunden sind, dass sich die in den Behältern (5, 6) befindliche Flüssigkeit (4) über eine gemeinsame Entnahmestelle (8) entnehmen lässt, zeichnet dadurch aus, dass die gemeinsame Entnahmestelle (8) einem ersten Behälter (5) der zumindest zwei Behälter (5, 6) zugeordnet ist und dass Mittel vorgesehen sind, die zumindest ab Unterschreiten einer Füllhöhe (h₀) des ersten Behälters (5) verhindern, dass Flüssigkeit (4) aus dem ersten Behälter (5) in den zumindest einen weiteren Behälter (6) fließt.

## Beschreibung

Die Erfindung betrifft ein landwirtschaftliches Fahrzeug, insbesondere einen Traktor gemäß dem Oberbegriff des Anspruchs 1.

Landwirtschaftliche Fahrzeuge wie beispielsweise Traktoren sind üblicherweise mit einem Verbrennungsmotor ausgestattet, der zur Bereitstellung von Antriebsleistung für den Fahrantrieb sowie für unterschiedliche weitere Funktionseinrichtungen (z.B. Arbeitshydraulik, Elektrik, Pneumatik etc.) dient. Zum Betrieb des Verbrennungsmotors ist an Bord des Traktors Kraftstoff, zumeist in Form von flüssigem Diesel mitzuführen. Auch für andere Flüssigkeiten wie flüssige Betriebs- oder Hilfsstoffe, die an landwirtschaftlichen Fahrzeugen zu verschiedenen Zwecken zum Einsatz kommen können, beispielsweise Wasser, Öl, wässrige Harnstofflösung (selektive katalytische Reaktion), Siliermittel und dergleichen, besteht ein Bedarf, diese in ausreichender Menge am Fahrzeug zu bevorraten.

Insbesondere bei Traktoren stößt die Bevorratung von Kraftstoff an Kapazitätsgrenzen, da der für einen Kraftstoffbehälter zur Verfügung stehende Bauraum in zunehmendem Maße durch verschiedene Faktoren begrenzt wird. Dazu zählen unter anderem eine wachsende Anzahl von Zusatzaggregaten für ergänzende Funktionen am Traktor, aufgrund von höheren Leistungsanforderungen baulich größer werdende Aggregate und allgemein engere Konstruktionsvorgaben. Eine Beschränkung des verfügbaren Bauraums - und damit des nutzbaren Vorratsvolumens - für Kraftstoff stellt jedoch eine nachteilige Beschränkung der Reichweite des Traktors dar.

Um einer Beschränkung der Reichweite entgegenzuwirken und zu diesem Zweck den (noch) vorhandenen Bauraum besser nutzen zu können, ist es bekannt, für die Kraftstoffbevorratung mehrere Behälter am Fahrzeug anzuordnen. Beispielhaft sei dazu auf die DE 10 2007 048 333 A1 verwiesen, bei der zwei Kraftstoffbehälter an örtlich getrennten Positionen, nämlich auf gegenüberliegenden Seiten des Traktors angeordnet sind, weil dort jeweils ein entsprechender Bauraum zur Verfügung steht.

Bei Fahrzeugen mit mehreren Behältern sind diese zweckmäßigerweise mit einer Leitungsanordnung derart miteinander verbunden, dass sich die in den Behältern befindliche Flüssigkeit - in der Regel Dieselkraftstoff - über eine gemeinsame, beispielsweise mittig zwischen den Behältern befindliche Entnahmestelle den Behältern entnehmen lässt. Die Gesamtmenge des mitgeführten Kraftstoffs lässt sich durch diese Maßnahme deutlich erhöhen, beispielsweise verdoppeln, wenn beidseitig jeweils ein ähnlich großer Bauraum genutzt werden kann. Die gemeinsame Entnahmestelle ermöglicht es, dass für beide Kraftstoffbehälter eine einzige Kraftstoffleitung und - pumpe zur Zuführung des Kraftstoffs zum Verbrennungsmotor gemeinsam genutzt werden kann. Um eine möglichst vollständige Entleerung der Behälter zu ermöglichen, ist die gemeinsame Entnahmestelle tief, insbesondere auf (oder sogar unterhalb vom) Bodenniveau der Behälter angeordnet.

Bei Fahrt des Traktors auf ebenem Gelände (ohne Hangneigung) lässt sich die Kapazität des Kraftstoffvorrats nahezu vollständig ausschöpfen. Ist der Traktor jedoch - wie in der Praxis durchaus üblich - auf Gelände mit Hangneigung im Einsatz, fließt der Kraftstoff über die die Behälter verbindende Leitung in den jeweils hangabwärts gelegenen Behälter. Ab Unterschreiten einer bestimmten, von der jeweiligen Geometrie der Anordnung abhängigen Kraftstoffmenge führt dies dazu, dass über die gemeinsame Entnahmestelle kein Kraftstoff mehr entnommen werden kann, wenn diese nämlich aufgrund entsprechender Hangneigung oberhalb des Flüssigkeitsspiegels liegt und damit trockengelegt ist. Die zwar theoretisch vorhandene Kapazität des Vorratsvolumens kann somit nicht ausgeschöpft werden. Folglich ist die Reichweite des Traktors bei Hangneigung deutlich reduziert.

Eine denkbare Lösungsmöglichkeit, die gemeinsame Entnahmestelle niedriger anzuordnen, um so auch bei Hangneigung ein vollständiges Ablaufen des Kraftstoffs zu erreichen, weist den Nachteil auf, dass eine solche Anordnung das gewünschte Bodenspiel unterhalb des Traktors stark verringert.

Es ist eine Aufgabe der vorliegenden Erfindung, ein landwirtschaftliches Fahrzeug, insbesondere einen Traktor mit einer Einrichtung zur Bevorratung für Flüssigkeit in mehreren Behälter anzugeben, deren Kapazität sich insbesondere auch bei starker Hangneigung in hohem Maße nutzen lässt.

Die Aufgabe wird gelöst durch ein Fahrzeug gemäß den Merkmalen des Anspruchs 1. Dieses zeichnet sich dadurch aus, dass die gemeinsame Entnahmestelle einem ersten Behälter der zumindest zwei Behälter zugeordnet ist und dass Mittel vorgesehen sind, die zumindest ab Unterschreiten einer Überlaufhöhe des ersten Behälters verhindern, dass Flüssigkeit aus dem ersten Behälter in den zumindest einen weiteren Behälter fließt. Erfindungsgemäß besteht damit weiterhin eine gemeinsame Entnahmestelle, die es ermöglicht, die Flüssigkeit beider Behälter auf einfache Weise über eine gemeinsame Leitung (und ggf. Pumpe, z.B. Kraftstoffpumpe) zu entnehmen. Weiterhin wird erreicht, dass zumindest ab Unterschreiten der Überlaufhöhe in dem ersten Behälter verhindert wird, dass Flüssigkeit aus dem ersten in den zumindest einen weiteren Behälter fließt. Demnach führt eine auftretende Hangneigung - zumindest ab Unterschreiten der Überlaufhöhe - nicht dazu, dass Flüssigkeit aus dem ersten, mit der gemeinsamen Entnahmestelle versehenen Behälter abfließen kann. Die gemeinsame Entnahmestelle kann somit bei Neigung des Fahrzeugs auch noch eine deutlich geringere Restmenge an Flüssigkeit entnehmen. Die Kapazität der Vorratseinrichtung kann somit in höherem Maße genutzt werden.

Zum gemeinsamen Befüllen der Behälter ist es zweckmäßig, dass diese über eine Ausgleichsleitung miteinander verbunden sind. Vorteilhaft mündet dabei ein dem ersten Behälter zugeordnetes Ende der zwischen den Behältern verlaufenden Ausgleichsleitung oberhalb der Überlaufhöhe in den ersten Behälter. Eine derartige Anordnung bewirkt vorteilhaft, dass Flüssigkeit nur bei Überschreiten der Überlaufhöhe vom ersten in den zumindest einen weiteren Behälter fließen kann. Befindet sich nur noch eine Restmenge an Flüssigkeit im ersten Behälter, kann diese den ersten Behälter nicht mehr verlassen, da auch bei Hangneigung des Fahrzeugs der Flüssigkeitsspiegel die Überlaufhöhe nicht erreicht. Zweckmäßigerweise ist die Überlaufhöhe dazu so gewählt, dass selbst bei einer im Arbeitsbetrieb des Fahrzeugs auftretenden Neigung, insbesondere einer bezogen auf die Fahrzeuglängsrichtung seitlichen Hangneigung verhindert wird, dass eine im ersten Behälter befindliche Restmenge von Flüssigkeit in den zumindest einen weiteren Behälter fließt.

Es ist zweckmäßig, dass ein dem zumindest einen weiteren Behälter zugeordnetes Ende der Ausgleichsleitung auf maximal der gleichen Höhe in den zumindest einen weiteren Behälter mündet wie das dem ersten Behälter zugeordnete Ende in den ersten Behälters mündet. Bei einer derartigen Anordnung ist nämlich die Ausgleichsleitung im Sinne eines Überlaufs dazu nutzbar, den zumindest einen weiteren Behälter durch Befüllen des ersten Behälters mit Flüssigkeit zu füllen. Demnach füllt sich zunächst der erste Behälter mit Flüssigkeit bis diese - ab Erreichen eines ausreichenden Flüssigkeitsspiegels - in die Ausgleichsleitung eintritt. Mit weiterer Befüllung des ersten Behälters findet ein Überlaufen in den zumindest einen weiteren Behälter statt, so dass dieser über den ersten Behälter mit Flüssigkeit befüllt wird.

Es ist zweckmäßig, dass sich die gemeinsame Entnahmestelle der Behälter in einem möglichst tief gelegenen Bereich des ersten Behälters befindet. Auf diese Weise kann die Flüssigkeit aus dem ersten Behälter auch bei Hangneigung des Fahrzeug möglichst vollständig entnommen werden. Es ist denkbar, dass eine Bodenfläche des ersten Behälters dazu im Sinne zumindest einer leichten Trichterform ausgebildet ist, die an der Entnahmestelle mündet.

Um während des Betriebs des Fahrzeugs auf die in dem zumindest einen weiteren Behälter bevorratete Flüssigkeit Zugriff zu erhalten, ist dem zumindest einen weiteren Behälter vorzugweise eine Entnahmestelle zugeordnet, durch welche dem zumindest einen weiteren Behälter Flüssigkeit entnehmbar und über eine Zuführleitung in den ersten Behälter förderbar ist. Die Zuführleitung kann in unterschiedlicher Weise gestaltet sein. Zweckmäßigerweise ist der Zuführleitung dabei zumindest ein aktives Förderorgan, insbesondere eine Pumpe zugeordnet. Es ist denkbar, dass diese Pumpe kontinuierlich läuft, beispielsweise bei laufender Verbrennungsmotor und/oder bei laufender Kraftstoffpumpe. Daneben ist es denkbar, dass die der Zuführleitung zugeordnete Pumpe basierend auf dem Signal von Füllstandssensoren mittels einer Steuerungselektronik so gesteuert wird, dass die Behälter jeweils einen etwa ausgeglichenes Füllstand aufweisen, um eine gleichmäßige Ballastierung des Fahrzeugs zu erzielen.

Bei dem mit der beschriebenen Einrichtung zur Bevorratung von Flüssigkeit ausgestatteten Fahrzeug handelt es sich bevorzugt um einen Traktor. Grundsätzlich ist die Erfindung jedoch auch auf andere landwirtschaftliche Fahrzeuge, beispielsweise auf selbstfahrende Erntemaschinen oder dergleichen anwendbar. In besonderer Weise eignet sich die Erfindung für ein Fahrzeug, das mit einem Verbrennungsmotor ausgestattet ist, wobei in diesem Fall die Einrichtung zur Bevorratung von Kraftstoff zum Betrieb des Verbrennungsmotors dienen kann.

Es sind verschiedene Anordnungen denkbar, um an einem Fahrzeug mehrere Behälter zur Bevorratung einer Flüssigkeit mitzuführen. Gemäß einer vorteilhaften Weiterbildung sind dabei die Behälter bezogen auf eine Längsrichtung des Fahrzeugs seitlich nebeneinander, insbesondere auf einer etwa gleichen Höhe, und mit einem Abstand zueinander angeordnet. Bevorzugt können die Behälter weiterhin bezogen auf die Längsrichtung des Fahrzeugs auf gegenüberliegenden Seiten von Komponenten eines Antriebsstrangs des Fahrzeugs angeordnet sein. So sind beispielsweise bei Traktoren wesentliche Komponenten des Antriebsstrangs wie Verbrennungsmotor, Kupplung, Getriebe, Übertragungswellen, Differentialgetriebe etwa mittig bezüglich der Fahrzeuglängsrichtung angeordnet. Für eine Anordnung von Kraftstoffbehältern steht daher insbesondere seitlich dieser Komponenten Bauraum zur Verfügung. Mit der vorliegenden Erfindung ist es auf vorteilhafte Weise möglich, zwei beidseits von Antriebsstrangkomponenten befindliche Behälter durch oberhalb dieser Komponenten verlaufende Leitungsmittel miteinander zu verbinden.

Die Erfindung wird nachfolgend anhand eines Ausführungsbeispiels näher erläutert. Daraus ergeben sich auch vorteilhafte Wirkungen und Effekte. In den Figuren zeigt:
- Fig. 1: einen Traktor in schematischer Ansicht von der Seite,
- Fig. 2a: einen Traktor gemäß dem Stand der Technik bei ebenem Gelände in schematischer Ansicht von vorn,
- Fig. 2b: den Traktor gemäß Fig. 2a bei seitlicher Hangneigung,
- Fig. 2c: den Traktor gemäß Fig. 2a bei seitlicher Hangneigung,
- Fig. 3a: einen erfindungsgemäßen Traktor in schematischer Ansicht von vorn bei ebenem Gelände,
- Fig. 3b: den Traktor gemäß Fig. 3a bei seitlicher Hangneigung.

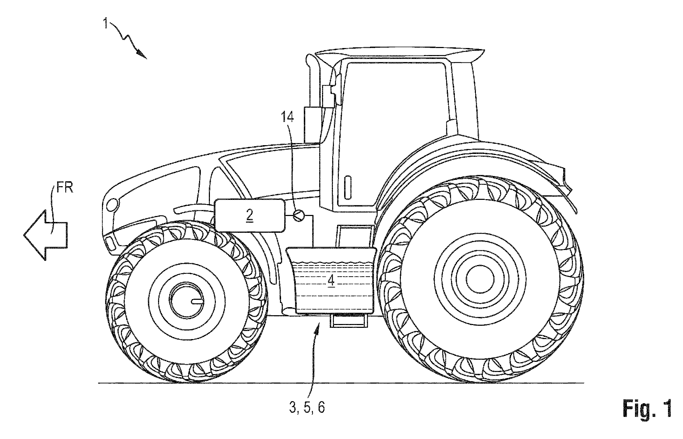

In Fig. 1 ist ein landwirtschaftliches Fahrzeug in Form eines Traktors 1 in schematischer Ansicht von der Seite gezeigt. Der Traktor 1 weist einen Verbrennungsmotor 2 auf, der auf für sich bekannte und daher nicht weiter zu erläuternde Weise zum Fahrantrieb des Traktors 1 dient. Daneben kann der Verbrennungsmotor 2 auf für sich bekannte Weise zum Antrieb von Arbeits- und Hilfsaggregaten (Arbeitshydraulik, Pneumatik, Elektrik etc.) des Traktors 1 dienen. Zur Versorgung des Verbrennungsmotors 2 mit Kraftstoff 4, insbesondere flüssigem Diesel, ist der Traktor 1 mit einer Einrichtung 3 zur Bevorratung von Flüssigkeit ausgestattet. Diese umfasst zwei Behälter 5, 6, von denen der bezogen die Fahrzeuglängsrichtung FR linksseitig angeordnete Behälter 5 in der Zeichnungsdarstellung gemäß Fig. 1 im Vordergrund liegt. Der in den Behältern 5, 6 befindliche Kraftstoff 4 wird während des Betrieb des Verbrennungsmotors 2 über eine gemeinsame Kraftstoffleitung mittels einer Kraftstoffpumpe 14 zum Verbrennungsmotor 2 gefördert.

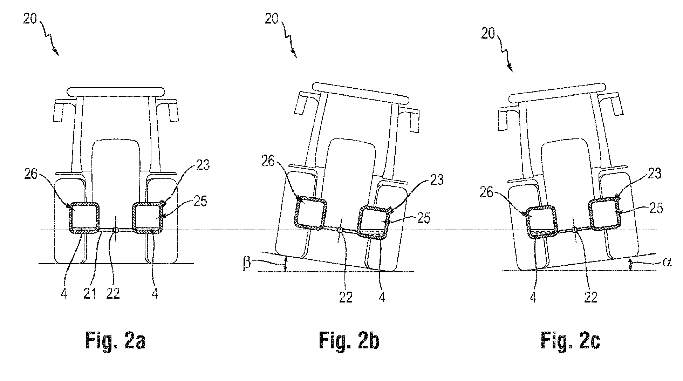

In Fig. 2a ist ein aus dem Stand der Technik bekannter Traktor 20 in einer schematischen Ansicht von vorn gezeigt. Der Traktor 20 weist zur Bevorratung von Kraftstoff zwei Behälter 25, 26 auf, von denen bezogen auf die Fahrzeuglängsrichtung ein erster Behälter 25 linksseitig angeordnet ist, während ein zweiter Behälter 26 rechtsseitig angeordnet ist. Aufgrund des Vorhandenseins von zwei Behältern 25, 26 entspricht die Kraftstoffkapazität der Vorratseinrichtung zunächst der Summe der Einzelkapazitäten von Behälter 25 und Behälter 26. Um ein gemeinsames Befüllen (Einfüllöffnung 23) und eine gemeinsame Entnahme von Kraftstoff aus beiden Behältern 25, 26 zu ermöglichen, sind die Behälter 25, 26 auf deren Bodenhöhe mit einer Ausgleichsleitung 21 verbunden. Eine gemeinsame Entnahmestelle 22 befindet sich auf halber Länge der Ausgleichsleitung 21 mittig zwischen den Behältern 25, 26. Bei Betrieb des Traktors 20 auf ebenem Gelände, wie in Fig. 2a gezeigt, lässt sich den Behältern 25, 26 über die Entnahmestelle 22 der gesamte in den Behältern 25, 26 bevorratete Kraftstoff 4 entnehmen, so dass die verfügbare Kraftstoffkapazität des Traktors 20 der Summe der Einzelkapazitäten von Behälter 25 und Behälter 26 entspricht.

Davon abweichende Situationen sind in den Fig. 2b und 2c gezeigt. In diesen ist jeweils wieder der Traktor 20 gemäß Fig. 2a dargestellt, weshalb auf eine erneute Bezeichnung gleicher Merkmale verzichtet wird. Im Unterschied zur Darstellung gemäß Fig. 2a ist jedoch der Traktor 20 in Fig. 2b aufgrund einer Neigung des Untergrunds (Hangneigung) um einen Winkel β geneigt, während der Traktor 20 in Fig. 2c aufgrund einer dazu entgegengesetzten Neigung des Untergrunds (Hangneigung) um einen Winkel α geneigt ist. Wie sich aus der zeichnerischen Darstellung des Füllstands des Kraftstoffs 4 ergibt, ist der verbleibende Kraftstoff 4 dabei vollständig in den jeweils hangabwärts gelegenen der Behälter geflossen, d.h. in Fig. 2b in den Behälter 25 und in Fig. 2c in den Behälter 26. Die gemeinsame Entnahmestelle 22 liegt dabei jeweils oberhalb des Flüssigkeitsspiegels, liegt damit also trocken, so dass über die Entnahmestelle 22 kein Kraftstoff 4 mehr entnehmbar ist, obwohl sich in dem hangabwärts gelegenen Behälter 25 (Fig. 2b) bzw. 26 (Fig. 2c) noch Kraftstoff 4 befindet. Die nutzbare Kraftstoffkapazität liegt somit deutlich unterhalb der Summe der Einzelkapazitäten von Behälter 25 und Behälter 26, ist nämlich um ein Totvolumen reduziert, das der noch im hangabwärts liegenden Behälter 25 bzw. 26 befindlichen Menge an Kraftstoff 4 entspricht. Dieses Totvolumen reduziert - zumindest bei Fahrt des Traktors 20 auf geneigtem Gelände - die Reichweite des Traktors 20 in erheblichem Maße.

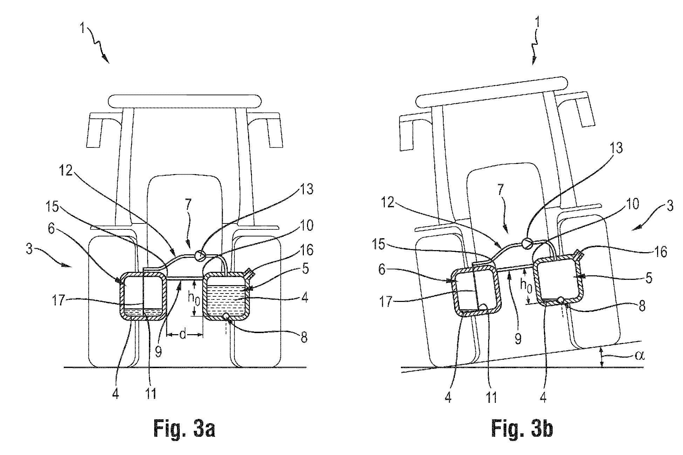

In den Fig. 3a und 3b ist in schematischer Ansicht von vorn ein erfindungsgemäßer Traktor 1 gezeigt, bei dem trotz vergleichbarer Anordnung zweier Kraftstoffbehälter dieses Totvolumen deutlich reduziert ist. Bei dem in den Fig. 3a und 3b gezeigten Traktor 1 kann es sich beispielsweise um einen wie in Fig. 1 von der Seite gezeigten Traktor 1 handeln.

Gemäß Fig. 3a weist der Traktor 1 eine Einrichtung 3 zur Bevorratung von flüssigem Kraftstoff 4 auf. Diese umfasst einen ersten Behälter 5, der linksseitig bezogen auf die Fahrzeuglängsrichtung des Traktors 1 angeordnet ist und einen entsprechend rechtsseitig angeordneten zweiten Behälter 6. Die Behälter 5, 6 sind mittels einer Leitungsanordnung 7 derart miteinander verbunden, dass sich in den Behältern 5, 6 befindlicher Kraftstoff 4 über eine gemeinsame Entnahmestelle 8 entnehmen lässt. Anders als beim Traktor 20 gemäß Fig. 2a bis 2c, ist beim Traktor 1 gemäß Fig. 3a (und auch 3b) jedoch die Entnahmestelle 8 dem ersten Behälter 5 zugeordnet, befindet sich nämlich in einem tief gelegenen Bereich des ersten Behälters 5. Weiterhin verfügt der Traktor 1 über Mittel, die zumindest ab Unterschreiten einer Überlaufhöhe h₀ des ersten Behälters 5 verhindern, dass Kraftstoff 4 aus dem ersten Behälter 5 in den zweiten Behälter 6 fließen kann. Die Behälter 5, 6 verbindende Leitungen 9, 12 verlaufen zu diesem Zweck ausschließlich oberhalb einer Höhengrenze, die hier als Überlaufhöhe h₀ bezeichnet sei. Wie der Darstellung zu entnehmen, mündet insbesondere ein dem ersten Behälter 5 zugeordnetes Ende 10 einer zwischen den Behältern verlaufenden Ausgleichsleitung 9 oberhalb der Überlaufhöhe h₀ in den ersten Behälter 5.

Dabei ist die Überlaufhöhe h₀ so gewählt, dass selbst bei einer im Arbeitsbetrieb des Traktors 1 auftretenden Neigung α verhindert wird, dass eine im ersten Behälter 5 befindliche Restmenge von Flüssigkeit 4 in den zweiten Behälter 6 fließt. Hierzu sei auf die Darstellung der Fig. 3b verwiesen, die den Traktor 1 gemäß Fig. 3a zeigt, der jedoch um einen Winkel α geneigt ist, beispielsweise weil dieser bei Feldfahrt über einen entsprechend geneigten Untergrund fährt. Aufgrund der oberhalb der Überlaufhöhe h₀ in den ersten Behälter 5 mündenden Ausgleichsleitung 9 kann die im ersten Behälter 5 befindliche Restmenge an Kraftstoff 4 nicht in den zweiten Behälter 6 fließen, sondern verbleibt im ersten Behälter 5. Der Kraftstoff 4 lässt sich dabei trotz der Hangneigung (Winkel α) solange aus dem Behälter 5 entnehmen, bis nur noch eine sehr geringe, wie in Fig. 3b gezeigte Menge Kraftstoff 4 darin verbleibt.

Wie aus Fig. 3a ersichtlich, mündet ein dem zweiten Behälter 6 zugeordnetes Ende 15 der Ausgleichsleitung 9 etwa auf der gleichen Höhe in den zweiten Behälter 6 wie das dem ersten Behälter 5 zugeordnete Ende 10 der Ausgleichsleitung 9 in den ersten Behälters 5 mündet. Somit ist die Ausgleichsleitung 9 im Sinne eines Überlaufs dazu nutzbar, den zweiten Behälter 6 durch Befüllen des ersten Behälters 5 mit Kraftstoff 4 zu füllen. Die Betankung erfolgt dabei über eine am ersten Behälter 5 vorgesehene Einfüllöffnung 16.

Um den im zweiten Behälter 6 befindlichen Kraftstoff 4 verfügbar zu machen, ist auch dem zweiten Behälter 6 eine Entnahmestelle 11 zugeordnet. Durch diese ist dem zweiten Behälter 6 Kraftstoff 4 entnehmbar und über eine Zuführleitung 12 in den ersten Behälter 5 förderbar. Die Zuführleitung 12 umfasst zu diesem Zweck ein innerhalb des zweiten Behälters 6 angeordnetes Tauchrohr 17, dessen Tauchende in Bodennähe des zweiten Behälters 6 angeordnet ist.

Der Zuführleitung 12 ist weiterhin ein aktives Förderorgan in Form einer Pumpe 13 zugeordnet. Die Pumpe 13 dient dazu, im zweiten Behälter 6 befindlichen Kraftstoff 4 in den ersten Behälter 5 zu fördern. Gemäß einer einfachen Ausführungsmöglichkeit kann die Pumpe 13 im Dauerbetrieb arbeiten, beispielsweise stets bei Betrieb des Verbrennungsmotors 2 und/oder der Kraftstoffpumpe 14 (Fig. 1) aktiviert sein. Ein derartiger Betrieb hat neben einer einfachen Ansteuerung den Vorteil, dass im zweiten Behälter 6 befindlicher Kraftstoff 4 diesem mit hoher Wahrscheinlichkeit vollständig entnehmbar ist, zumindest wenn der Traktor 1 bei niedrigem Kraftstoffstand vorübergehend eine gerade Lage einnimmt. Alternativ könnte die Pumpe 13, basierend auf sensorisch erfassten Füllstandsignalen, mittels einer Steuerungselektronik (nicht gezeigt) in vorteilhafter Weise derartig aktiviert werden, dass die Füllstände in den Behältern 5, 6 stets etwa ausgeglichen sind, so dass sich seitenmäßig eine gleichmäßige Ballastierung des Traktors 1 ergibt.

Aus der Darstellung der Fig. 3b ist ersichtlich, dass der Traktor 1 die in den Behältern 5, 6 bevorratbare Menge an Kraftstoff 4 trotz einer Hangneigung α in hohem Maße nutzbar macht. Das bei dem Traktor 1 unter Hangneigung α nicht nutzbare Totvolumen an Kraftstoff 4, welches der Summe der beiden Restmengen an Kraftstoff 4 in dem ersten Behälter 5 und dem zweiten Behälter 6 entspricht, ist deutlich geringer als bei dem aus dem Stand der Technik bekannten Traktor 20 gemäß Fig. 2a bis 2c. Damit weist der Traktor 1 unter Hangneigungsbedingungen eine deutlich erhöhte Reichweite auf. Weiterhin bietet sich konstruktiv der Vorteil, dass Verbindungsleitungen zwischen den Behältern 5, 6 in größerer Höhe, insbesondere nämlich oberhalb von Komponenten des Antriebsstrangs wie beispielsweise Antriebswellen, Kupplungen, Getriebebaugruppen, Differentialgetriebe und dergleichen verlaufen können. Damit sind diese weniger Verschmutzung und Verschleiß ausgesetzt.

### Bezugszeichenliste

- 1: Traktor
- 2: Verbrennungsmotor
- 3: Bevorratungseinrichtung
- 4: Kraftstoff
- 5: erster Behälter
- 6: zweiter Behälter
- 7: Leitungsanordnung
- 8: Entnahmestelle
- 9: Ausgleichsleitung
- 10: Leitungsende
- 11: Entnahmestelle
- 12: Zuführleitung
- 13: Transferpumpe
- 14: Kraftstoffpumpe
- 15: Leitungsende
- 16: Einfüllöffnung
- 17: Tauchrohr
- 20: Traktor
- 21: Ausgleichsleitung
- 22: Entnahmestelle
- 23: Einfüllöffnung
- 25: erster Behälter
- 26: zweiter Behälter

- h₀: Überlaufhöhe
- d: Abstand
- α: Neigungswinkel
- β: Neigungswinkel
- FR: Fahrzeuglängsrichtung

## Patentansprüche

1. Landwirtschaftliches Fahrzeug, insbesondere Traktor (1) mit einer Einrichtung (3) zur Bevorratung einer Flüssigkeit (4) wie vorzugsweise eines Betriebs- oder Hilfsstoffs in zumindest zwei Behältern (5, 6), die mittels einer Leitungsanordnung (7) derart miteinander verbunden sind, dass sich die in den Behältern (5, 6) befindliche Flüssigkeit (4) über eine gemeinsame Entnahmestelle (8) entnehmen lässt,
**dadurch gekennzeichnet, dass** die gemeinsame Entnahmestelle (8) einem ersten Behälter (5) der zumindest zwei Behälter (5, 6) zugeordnet ist und dass Mittel vorgesehen sind, die zumindest ab Unterschreiten einer Überlaufhöhe (h₀) des ersten Behälters (5) verhindern, dass Flüssigkeit (4) aus dem ersten Behälter (5) in den zumindest einen weiteren Behälter (6) fließt.

2. Fahrzeug nach Anspruch 1, **dadurch gekennzeichnet, dass** ein dem ersten Behälter (5) zugeordnetes Ende (10) einer zwischen den Behältern verlaufenden Ausgleichsleitung (9) oberhalb der Überlaufhöhe (h₀) in den ersten Behälter (5) mündet.

3. Fahrzeug nach Anspruch 2, **dadurch gekennzeichnet, dass** die Überlaufhöhe (h₀) so gewählt ist, dass selbst bei einer im Arbeitsbetrieb des Fahrzeugs (1) auftretenden Neigung (α) verhindert wird, dass eine im ersten Behälter (5) befindliche Restmenge von Flüssigkeit (4) in den zumindest einen weiteren Behälter (6) fließt.

4. Fahrzeug nach Anspruch 2 oder 3, **dadurch gekennzeichnet, dass** ein dem zumindest einen weiteren Behälter (6) zugeordnetes Ende (15) der Ausgleichsleitung (9) auf maximal der gleichen Höhe in den zumindest einen weiteren Behälter (6) mündet wie das dem ersten Behälter (5) zugeordnete Ende (10) in den ersten Behälters (5) mündet, so dass die Ausgleichsleitung (9) im Sinne eines Überlaufs dazu nutzbar ist, den zumindest einen weiteren Behälter (6) durch Befüllen des ersten Behälters (5) mit Flüssigkeit (4) zu füllen.

5. Fahrzeug nach einem der vorigen Ansprüche, **dadurch gekennzeichnet, dass** sich die gemeinsame Entnahmestelle (8) der Behälter (5, 6) in einem tief gelegenen Bereich des ersten Behälters (5) befindet.

6. Fahrzeug nach einem der vorigen Ansprüche, **dadurch gekennzeichnet, dass** dem zumindest einen weiteren Behälter (6) eine Entnahmestelle (11) zugeordnet ist, durch welche dem zumindest einen weiteren Behälter (6) Flüssigkeit (4) entnehmbar und über eine Zuführleitung (12) in den ersten Behälter (5) förderbar ist.

7. Fahrzeug nach Anspruch 6, **dadurch gekennzeichnet, dass** der Zuführleitung (12) ein aktives Förderorgan, insbesondere eine Pumpe (13) zugeordnet ist.

8. Fahrzeug nach einem der vorigen Ansprüche, das mit einem Verbrennungsmotor (2) ausgestattet ist, wobei die Einrichtung (3) zur Bevorratung von Kraftstoff (4) zum Betrieb des Verbrennungsmotors (2) dient.

9. Fahrzeug nach einem der vorigen Ansprüche, **dadurch gekennzeichnet, dass** die Behälter (5, 6) bezogen auf eine Längsrichtung (FR) des Fahrzeugs (1) seitlich nebeneinander und mit einem Abstand (d) zueinander angeordnet sind.

10. Fahrzeug nach einem der vorigen Ansprüche, **dadurch gekennzeichnet, dass** die Behälter (5, 6) bezogen auf die Längsrichtung (FR) des Fahrzeugs (1) auf gegenüberliegenden Seiten von Komponenten (2) eines Antriebsstrangs des Fahrzeugs (1) angeordnet sind.
